# EUROPÄISCHE PATENTSCHRIFT

(11) **EP 1 051 831 B1**
(45) Veröffentlichungstag und Bekanntmachung des Hinweises auf die Patenterteilung: **17.04.2002**
(21) Anmeldenummer: 99910103.3
(22) Anmeldetag: 05.02.1999
(51) Int. Cl.: H04M 3/42, H04M 15/00

(54) **VERFAHREN ZUM ERSTELLEN EINES ADRESSVERZEICHNISSES**
PROCESS FOR GENERATING AN ADDRESS DIRECTORY
PROCEDE DE CREATION D'UN REPERTOIRE D'ADRESSES

(30) Priorität: 05.02.1998 DE 19804336
(43) Veröffentlichungstag der Anmeldung: 15.11.2000
(73) Patentinhaber: TTH AG, 3013 Bern (CH); IP2H AG, 3013 Bern (CH)
(72) Erfinder: ARNOLD, Jörg, D-69117 Heidelberg (DE)
(74) Vertreter: Naumann, Ulrich, Dr.-Ing.
(86) Internationale Anmeldenummer: DE9900302
(87) Internationale Veröffentlichungsnummer: WO9940708

(56) Entgegenhaltungen:
- WO-A-98/00988
- CA-A- 2 160 278

## Beschreibung

Die Erfindung betrifft ein Verfahren zum Erstellen eines Adreßverzeichnisses aus Adreßdaten von Teilnehmern in einem Telekommunikationsnetz, wobei die Adreßdaten eine Teilnehmerkennung und eine dem Teilnehmer zugeordnete Positionskennung umfassen.

Ein Adreßverzeichnis der in Rede stehenden Art ist beispielsweise in Form eines herkömmlichen Telefonbuchs bekannt, wobei die Teilnehmerkennung durch den Namen des Telefonanschlußinhabers und die dem Teilnehmer zugeordnete Positionskennung durch die Rufnummer gebildet sind. Die Positionszuordnung hinsichtlich der Rufnummer ergibt sich im Groben durch die Zuordnung der Teilnehmer zu vorgegebenen Vorwahlbereichen und detaillierter durch Anfangsziffern der Rufnummer, die eine Zuordnung zu bestimmten ortsfesten Vermittlungsstellen widerspiegeln. So liegt durch die Rufnummer des Teilnehmers eine Zuordnung des Teilnehmers zu einem bestimmten Ort und damit eine Positionskennung vor.

Die Erfindung wird im folgenden beispielhaft anhand der Erstellung eines Adreßverzeichnisses für ein Mobilfunknetz beschrieben. Dabei handelt es sich insbesondere um ein Mobilfunknetz gemäß der deutschen Patentanmeldung DE 195 35 021 A der Anmelderin, wobei das Mobilfunknetz aus einzelnen Mobilfunkgeräten besteht, die sowohl als Endgerät als auch als Relais dienen.

Im Gegensatz zu dem durch die Anmelderin mit der Patentanmeldung DE 195 35 021 A beschriebenen Mobilfunknetz sind heute vorwiegend Mobilfunknetze im Einsatz, die stationäre Funkeinrichtungen in Form von Relaisstationen aufweisen. Hierbei handelt es sich beispielsweise um die als C-, D1-, D2- und E-Plus-Netz bekannten Mobilfunknetze. Das Herstellen einer Funkverbindung erfolgt hier mittels externer Vermittlungsverfahren im Rahmen eines externen Funknetzmanagements. Die Lokalisation der Netzteilnehmer und die Verbindungsaufnahme zwischen den Netzteilnehmern erfolgt in diesen Mobilfunknetzen mittels der zentralen Vermittlungseinrichtung.

Beim Herstellen einer Funkverbindung spielen die zentralen Relaisstationen die grundlegende Rolle, da sie über eine Aufteilung des Funknetzgebietes in einzelne Netzzellen in einem ständigen wechselseitigen Kontakt mit den Netzteilnehmem stehen. So ist der jeweiligen Relaisstation der Aufenthaltsort des Netzteilnehmers durch dessen Rückmeldung bei der Relaisstation und dann weitergehend bei der Netzzentrale stets bekannt.

Beim Herstellen einer Funkverbindung zwischen zwei Netzteilnehmern werden die Netzteilnehmer zunächst mittels des zentralen Vermittlungsverfahrens lokalisiert. Anschließend wird die Funkverbindung zwischen den Netzteilnehmern berechnet bzw. festgelegt und dann aufgeschaltet. Die vorläufige Berechnung bzw. Festlegung des Verbindungspfads über mögliche Teilverbindungen wird dabei "Routing" genannt.

Die bekannten Verfahren wirken zwischen den Mobilfunkgeräten und den stationären Relaisstationen der jeweiligen Netzzellen der bekannten Funknetze. Bei den bekannten Funknetzen ist also wesentlich, daß externe und zentral gesteuerte Verfahren Anwendung finden, die im wesentlichen von einer externen Betreiberstelle - bspw. einem zentralen Betriebsrechner - außerhalb der einzelnen Mobilfunkgeräte bzw. Funkendgeräte eingesetzt werden.

Bei bekannten Verfahren zum Herstellen einer Funkverbindung innerhalb der bekannten Funknetze ist problematisch, daß zum Herstellen einer Funkverbindung stets stationäre Übertragungsrelais bzw. Relaisstationen erforderlich sind. Daraus folgt, daß bei der Einrichtung bzw. dem Neuaufbau eines Funknetzes der bekannten Art stets zunächst ein flächendeckendes Netz an stationären Relaisstationen aufgebaut werden muß. Damit ist die Flexibilität eines Netzsystems im Hinblick auf eine Neuimplementierung stark reduziert.

Bei dem durch die deutsche Patentanmeldung DE 195 35 021 A beschriebenen Mobilfunknetz bzw. Relaisfunknetz wird den einzelnen Netzteilnehmern - zum Herstellen einer Funkverbindung auch ohne stationäre Relaisstationen - eine individuelle ortsabhängige Positionskennung zugeordnet, so daß die Position aller Netzteilnehmer relativ zueinander bestimmt ist.

Durch die relativ zueinander festgelegte Positionskennung ist der Aufbau einer Funkverbindung schrittweise von Netzteilnehmer zu Netzteilnehmer ermöglicht. Das Vorsehen separater stationärer Relaisstationen ist nicht mehr erforderlich. Zum Aufbau einer Funkverbindung muß ein Quellenteilnehmer lediglich seine eigene Positionskennung und die Positionskennung des Zielteilnehmers wissen. Die Herstellung der Funkverbindung erfolgt dann über zwischen dem Quellenteilnehmer und dem Zielteilnehmer vorhandene weitere Netzteilnehmer, die aufgrund des Wissens ihrer eigenen Positionskennung ein vom Quellenteilnehmer ausgesandtes Funksignal zielgerichtet zu dem Zielteilnehmer weiterleiten können. Durch die Zuordnung einer Positionskennung können die Netzteilnehmer in dem Relaisfunknetz orts- und richtungsabhängig adressiert und zielortgerichtet verbunden werden.

Bei dem Verfahren zur Herstellung einer Funkverbindung werden die Lokalisation des Netzteilnehmers und die Festlegung des Funkpfads zwischen den Netzteilnehmern nicht exakt mittels stationärer Relaisstationen und festgelegter Funknetzzellen durchgeführt. Die Richtung des Funkpfades zum gewünschten Zielteilnehmer wird beim Funkverbindungsaufbau über die schrittweise Festlegung der aufeinanderfolgenden Teilfunkpfade über weitere Netzteilnehmer richtungsmäßig tendenziell vorgegeben. Während des Aufbaus bzw. der Aufschaltung der Funkverbindung ist die Funkverbindung bis zur Festlegung des letzten Teilfunkpfads noch nicht definitiv festgelegt. Daraus kann sich ergeben, daß möglicherweise mehrere Teilfunkpfade gleichzeitig ausgewählt werden und eine Mehrwegeausbreitung bzw. der Aufbau mehrerer paralleler Funkverbindungen erfolgt.

Hinsichtlich einer besonders einfachen Zuordnung von Positionskennungen könnte die Position relativ zu Funksignale aussendenden Funksignalgebern mit einem vorgebbaren Standort bestimmt werden. Hierzu könnten mindestens drei Funksignalgeber vorgesehen sein. Die Funksignalgeber könnten dann die Funksignale zu bestimmten Zeitpunkten oder nach bestimmten Zeitabständen aussenden. Durch den Empfang der Funksignale von den vorgebbaren Standorten läßt sich die Position des empfangenden Netzteilnehmers in einfacher Weise relativ zu den Funksignalgebern bestimmen. Hierdurch ist eine eindeutige Positionsbestimmung und eine eindeutige Zuordnung einer Positionskennung ermöglicht.

Bei Vorliegen von bspw. drei Funksignalgebern könnte das Funksignal des ersten Funksignalgebers bei Berücksichtigung von Relaisverzögerungen nach 1 Sek. bei dem betreffenden Netzteilnehmer eintreffen, das Funksignal des zweiten Funksignalgebers nach 3 Sek. und das Funksignal des dritten Funksignalgebers nach 5 Sek. Daraus ließe sich eine Positionskennung 1-3-5 erzeugen.

Eine weitere Möglichkeit der Erzeugung einer Positionskennung könnte durch ein von der Anzahl an Übermittlungen abhängiges Erhöhen eines Zählwerts oder Zählarguments innerhalb des Funksignals abgeleitet werden. Mit anderen Worten wird bei jeder Übermittlung des jeweiligen Funksignals ein Zahlenwert um bspw. 1 erhöht. Bei Vorliegen von z.B. drei Funksignalgebem könnte dann eine Positionskennung aus der jeweiligen Anzahl von Übermittlungen des jeweiligen Funksignals wie folgt bestehen. Hat bspw. das erste Funksignal drei Übermittlungen hinter sich gebracht, das zweite Funksignal zehn Übermittlungen und das dritte Funksignal zwanzig Übermittlungen, wäre eine Positionskennung 3-10-20 denkbar. Damit könnten die Funksignale der Funksignalgeber bei der Weiterübermittlung im Funknetzgebiet eine ortsabhängige und/oder richtungsabhängige Änderung von Zählargumenten, die die Funksignale enthalten, durch ein Weiterzählen durch die jeweiligen Übermittler erfahren. Mit anderen Worten ist eine ortsabhängige und richtungsabhängige Differenzierung der Positionssequenzen erreicht, wobei jeder Übermittler bei der Übermittlung eine Schrittzahl chronologisch mitzählt bzw. weiterzählt und diese als Informationsbestandteil im Gebersignal abändert bzw. hinzufügt. Diese Positionskennungen entwickeln sich hierbei wegen der weitergezählten Schrittzahl ortsabhängig und richtungsabhängig über das Netzgebiet.

Eine dritte Möglichkeit der Positionskennung könnte erreicht werden, wenn die Funksignalgeber aus Satelliten des Ground-Positioning-Systems (GPS) bestünden. Dabei empfangen die Netzteilnehmer als Signale ihre absolute geographische Position. Diese besteht aus den Parametern geographische Breite und geographische Länge. Die Positionskennung könnte dann lediglich aus den über das GPS erhaltenen geographischen Positionsdaten bestehen.

Bei der Aufnahme der Funkverbindung bzw. beim Herstellen der Funkverbindung könnten die Netzteilnehmer die gewünschten Zielteilnehmer mit diesen Positionskennungen adressieren.

Für das Herstellen der Funkverbindung ist wesentlich, daß der betrachtete Netzteilnehmer die eigene Positionskennung sowie die Positionskennungen des Quellenteilnehmers - gegebenenfalls der Netzteilnehmer selbst - und des Zielteilnehmers kennt.

Die Zielteilnehmerkennung ist dem Benutzer oder dem Quellenteilnehmer aus einer Art Telefonbuch - dem Adreßverzeichnis - mit sämtlichen Positionskennungen der Zielteilnehmer bekannt. Ein derartiges Telefonbuch kann in Form einer elektronischen Speicherung beim Quellenteilnehmer vorliegen. Die Aktualisierung des Telefonbuchs erfolgt nach jedem Zuordnungsvorgang der Positionskennung. Dieser Zuordnungsvorgang kann täglich, stündlich oder in noch kürzeren Zeitabständen erfolgen.

Die Positionskennung eines Zielteilnehmers kann nach einer erneuten Funksignalgeberaktion wieder erneuert bzw. geändert und in einer bereits aufgeschalteten Funkverbindung den Übermittlern und dem Quellenteilnehmer übermittelt werden.

Das für das Mobilfunknetz gemäß der deutschen Patentanmeldung DE 195 35 021 A erforderliche Adreßverzeichnis mit allen Teilnehmern muß möglichst oft aktualisiert werden, da nicht sämtliche Teilnehmer ortsfest bleiben. Ein Verfahren zur Zuordnung derartiger Positionskennungen ist in der deutschen Patentanmeldung DE 197 26 956 A beschrieben.

In der kanadischen Patentanmeldung CA 2 160 278 wird ein Verfahren zum Erstellen eines Adreßverzeichnisses aus Adreßdaten von Teilnehmers in einem Telekommunikationsnetz offenbart, wobei die Adreßdaten eine Teilnehmerkennung und eine Positionskennung umfassen und in dem während eines Gebührenfeststellungsvorgangs für die Nutzung des Telekommunicationsnetzes eine Übertragung der Positionskennung des Teilnehmers vom Teilnehmer zu einer Datenerfassungstelle zur Erstellung des Adreßverzeichnisses erfolgt.

Der vorliegenden Erfindung liegt nunmehr die Aufgabe zugrunde, ein Verfahren zum Erstellen eines Adreßverzeichnisses der eingangs genannten Art anzugeben, bei dem eine einfache Erstellung des Adreßverzeichnisses erreicht ist.

Erfindungsgemäß wird die voranstehenden Aufgabe durch ein Verfahren mit den Merkmalen des Patentanspruchs 1 gelöst. Das in Rede stehende Verfahren ist derart ausgestaltet, daß während eines Gebührenzahlungsvorgangs für die Nutzung des Telekommunikationsnetzes eine mindestens teilweise Übertragung von Adreßdaten vom Teilnehmer zu einer Datenerfassungsstelle erfolgt.

In erfindungsgemäßer Weise ist erkannt worden, daß das Erstellen eines Adreßverzeichnisses ganz besonders begünstigt wird, wenn entsprechende Adreßdaten vom Teilnehmer zu einer Datenerfassungsstelle und/oder -einrichtung im Rahmen eines Gebührenzahlungsvorgangs für die Nutzung des Telekommunikationsnetzes erfolgt. Die Datenübertragung ist damit an einen Gebührenzahlungsvorgang gekoppelt. Derartige Gebührenzahlungsvorgänge sind immer wieder nach bestimmten Zeitabständen vor und/oder nach einer Nutzung erforderlich, so daß eine Aktualisierung des Adreßverzeichnisses in eleganter und einfacher Weise quasi gleichzeitig mit einer Gebührenzahlung erfolgen kann. Ein separater Aktualisierungsvorgang hinsichtlich der Adreßdaten nach einer Ortsveränderung des Teilnehmers ist damit nicht erforderlich.

Folglich ist ein Verfahren zum Erstellen eines Adreßverzeichnisses angegeben, bei dem eine einfache Erstellung des Adreßverzeichnisses erreicht ist.

Die Übertragung von Adreßdaten während eines Gebührenzahlungsvorgangs könnte im konkreten die Übertragung von Adreßdaten vor und/oder während und/oder nach der Übertragung von die Gebührenzahlung betreffenden Daten bedeuten. Mit anderen Worten könnte eine parallele und/oder sequentielle Datenübertragung der Adreßdaten und der die Gebührenzahlung betreffenden Daten vorliegen. Daten, die die Gebührenzahlung betreffen, könnten beispielsweise Daten hinsichtlich des zu entrichtenden Gebührenbetrags sein.

In besonders benutzerfreundlicher Weise könnte die Übertragung der Adreßdaten automatisch erfolgen. Der Benutzer müßte sich dabei nicht um die Datenübertragung kümmem. Alternativ hierzu könnte die Übertragung von Adreßdaten nur auf besonderen Wunsch des Teilnehmers erfolgen, beispielsweise nach einer Ortsveränderung des Teilnehmers.

Die Erstellung des Adreßverzeichnisses könnte in besonders zeitsparender Weise durch die Datenerfassungsstelle selbst erfolgen. Dabei ist auch denkbar, daß die Datenerfassungsstelle nicht nur aktuelle Adreßdaten vom Teilnehmer empfängt, sondern gleichzeitig auch den Teilnehmer mit aktuellen Adreßdaten anderer Teilnehmer, vorzugsweise in Form eines kompletten Adreßverzeichnisses sämtlicher Teilnehmer versorgt.

Des weiteren könnte die Datenerfassungsstelle die Adreßdaten zur Erstellung des Adreßverzeichnisses an einen Dritten weiterleiten. Der Hersteller des Adreßverzeichnisses - die Datenerfassungsstelle oder ein Dritter - könnte Adreßauskünfte nur gegen eine Gebührenzahlung bereitstellen. Auch eine derartige Gebührenzahlung für eine Adreßauskunft ist als eine Gebührenzahlung für die Nutzung des Telekommunikationsnetzes zu verstehen, da auch eine derartige Auskunftseinholung eine Nutzung des Telekommunikationsnetzes darstellt. Insoweit könnte eine mindestens teilweise Übertragung von Adreßdaten vom Teilnehmer zu einer Datenerfassungsstelle auch während eines Gebührenzahlungsvorgangs für eine Auskunftseinholung erfolgen.

In besonders praktischer Weise könnte die Datenerfassungsstelle die Vergebührung der Nutzung des Telekommunikationsnetzes durchführen. Mit anderen Worten ist die Datenerfassungsstelle gleichzeitig auch die Zahlungsstelle für jedwede Gebühren.

Die Datenerfassungsstelle könnte des weiteren auch ein Geldinstitut sein, das im Rahmen des Zahlungsvorgangs eine entsprechende Abbuchung von einem Konto des Teilnehmers vornimmt. Die Erstellung des Adreßverzeichnisses könnte dann durch das Geldinstitut erfolgen.

Im Hinblick auf eine einfache Übertragung der Adreßdaten könnte die Übertragung über einen einen Speicher aufweisenden Informationsträger erfolgen. Ein derartiger Informationsträger könnte in besonders einfacher Weise als Chipkarte, Magnetstreifenkarte oder PIN-Karte ausgebildet sein. Im konkreten könnte der Informationsträger eine Kreditkarte, Geldkarte, Geldautomatenkarte oder Telefonkarte sein. Der Informationsträger könnte weiter im konkreten durch eine SIM-Karte oder eine ähnliche Karte gebildet sein, die für die Nutzungsfreischaltung eines Teilnehmers im Telekommunikationsnetz maßgeblich ist. Die Adreßdaten des Teilnehmers könnten in dem Speicher abgelegt sein, so daß ein möglichst problemloser Zugriff während des Gebührenzahlungsvorgangs ermöglicht ist. Eine Vergebührung könnte mittels eines Verfahrens und einer Vorrichtung erfolgen, die in der DE 197 19 002 A1 beschrieben sind. Danach könnte die Vergebührung über einen als Chipkarte oder Magnetstreifenkarte ausgebildeten Informationsträger erfolgen. Die für die Vergebührung erforderlichen Daten werden von dem Informationsträger zu der Datenerfassungsstelle oder zu dem Geldinstitut übertragen.

Die Übertragung könnte in besonders sicherer Weise während der Anordnung des Informationsträgers in einem Übertragungsmittel erfolgen. Als Übertragungsmittel bietet sich hierbei ein Geldautomat an. Ein derartiger Geldautomat könnte nicht nur zum Zahlen der Gebühren, sondern auch zum Abheben von Bargeld ausgebildet sein. Das Übertragungsmittel könnte zum Beschreiben und zum Auslesen des Speichers eine Schreib-/Leseeinheit für den Speicher aufweisen. Dies ermöglicht einerseits ein Übertragen der Adreßdaten vom Teilnehmer und andererseits eine Aktualisierung eines Adreßverzeichnisses beim Teilnehmer.

In jedem Fall ist eine für die Übertragung von Daten geeignete Verbindung zwischen dem Übertragungsmittel und der Datenerfassungsstelle sicherzustellen.

Alternativ oder zusätzlich zu einer Übertragungsmöglichkeit der Adreßdaten in einem Übertragungsmittel könnte die Übertragung über eine Funkverbindung mit der Datenerfassungsstelle erfolgen. Die Funkverbindung könnte über ein Mobilfunkgerät des Teilnehmers realisiert sein.

Alternativ oder zusätzlich hierzu könnte die Übertragung optisch, vorzugsweise über eine Infrarotverbindung mit der Datenerfassungsstelle, erfolgen. Hierzu könnte ein Mobilfunkgerät des Teilnehmers eine Infrarotschnittstelle aufweisen.

Weiter alternativ oder zusätzlich hierzu könnte die Übertragung über eine Ultraschallverbindung mit der Datenerfassungsstelle erfolgen. Hierbei könnte ein Mobilfunkgerät des Teilnehmers eine Ultraschallschnittstelle aufweisen.

Bei dem in der deutschen Patentanmeldung DE 195 35 021 A beschriebenen Mobilfunknetz kann die Positionskennung eines Zielteilnehmers nach einer erneuten Funksignalgeberaktion wieder erneuert bzw. geändert und in einer bereits aufgeschalteten Funkverbindung den Übermittlern und dem Quellenteilnehmer übermittelt werden. Mit anderen Worten ist es möglich, daß ein Teilnehmer nicht nur seine eigenen Adreßdaten aufweist, sondern auch Adreßdaten anderer Teilnehmer. Folglich wäre es im Hinblick auf ein möglichst aktuelles und vollständiges Adreßverzeichnis besonders vorteilhaft, wenn die durch den zahlenden Teilnehmer übertragenen Adreßdaten sowohl Adreßdaten des zahlenden Teilnehmers als auch Adreßdaten eines oder mehrerer anderer Teilnehmer umfassen. Hierbei könnte ein wechselseitiger Abgleich zwischen den beim Teilnehmer abgespeicherten Adreßdaten und den bei der Datenerfassungsstelle abgespeicherten Adreßdaten insgesamt stattfinden. Der Abgleich könnte sämtliche Adreßdaten in dem Speicher des Teilnehmers und sämtliche Adreßdaten bei der Datenerfassungsstelle umfassen.

Jeder Teilnehmer wird interessiert sein, einen Gebührenzahlungsvorgang möglichst häufig durchzuführen, da gegebenenfalls nur hierdurch eine Aktualisierung seiner Adresse im allgemeinen Adreßverzeichnis möglich sein könnte. Nur so könnte die Erreichbarkeit des einzelnen Teilnehmers nach einer Ortsveränderung sicher gewährleistet sein.

## Patentansprüche

1. Verfahren zum Erstellen eines Adreßverzeichnisses aus Adreßdaten von Teilnehmern in einem dezentralen Funknetz, wobei die Adreßdaten eine Teilnehmerkennung und eine dem Teilnehmer zugeordnete Positionskennung umfassen, die anderen Teilnehmem zur Verfügung gestellt werden,
**dadurch gekennzeichnet, daß** gleichzeitig mit einer Gebührenzahlung für die Nutzung des dezentralen Funknetzes eine Übertragung der Positionskennung des Teilnehmers vom Teilnehmer zu einem als Datenerfassungsstelle dienenden Geldinstitut zur Erstellung des Adreßverzeichnisses erfolgt, wobei die Übertragung über einen einen Speicher aufweisenden Informationsträger während der Anordnung des Informationsträgers in einem Übertragungsmittel erfolgt und wobei im Rahmen des Zahlungsvorgangs eine entsprechende Abbuchung von einem Konto des Teilnehmers durch das Geldinstitut erfolgt.

2. Verfahren nach Anspruch 1, **dadurch gekennzeichnet, daß** die Übertragung der Positionskennung automatisch erfolgt.

3. Verfahren nach Anspruch 1 oder 2, **dadurch gekennzeichnet, daß** die Datenerfassungsstelle das Adreßverzeichnis erstellt.

4. Verfahren nach einem der Ansprüche 1 bis 3, **dadurch gekennzeichnet, daß** die Datenerfassungsstelle die Adreßdaten zur Erstellung des Adreßverzeichnisses an einen Dritten weiterleitet.

5. Verfahren nach einem der Ansprüche 1 bis 4, **dadurch gekennzeichnet, daß** der Informationsträger als Chipkarte, Magnetstreifenkarte oder PIN-Karte ausgebildet ist.

6. Verfahren nach einem der Ansprüche 1 bis 5, **dadurch gekennzeichnet, daß** das Übertragungsmittel ein Geldautomat ist.

7. Verfahren nach einem der Ansprüche 1 bis 6, **dadurch gekennzeichnet, daß** das Übertragungsmittel eine Schreib-/Leseeinheit für den Speicher aufweist.

8. Verfahren nach einem der Ansprüche 1 bis 7, **dadurch gekennzeichnet, daß** die Übertragung der Positionskennung über eine Funkverbindung mit der Datenerfassungsstelle erfolgt.

9. Verfahren nach einem der Ansprüche 1 bis 8, **dadurch gekennzeichnet, daß** die Übertragung der Positionskennung optisch, vorzugsweise über eine Infrarotverbindung, zu der Datenerfassungsstelle erfolgt.

10. Verfahren nach einem der Ansprüche 1 bis 9, **dadurch gekennzeichnet, daß** die Übertragung der Positionskennung über eine Ultraschallverbindung mit der Datenerfassungsstelle erfolgt.

11. Verfahren nach einem der Ansprüche 1 bis 10, **dadurch gekennzeichnet, daß** die durch den zahlenden Teilnehmer übertragene Positionskennung sowohl die Positionskennung des zahlenden Teilnehmers als auch die Positionskennung eines oder mehrerer anderer Teilnehmer umfaßten.

## Claims

1. Method for creating an address directory comprising address data of subscribers in a decentral radio network, the address data comprising a subscriber identifier and a position identifier assigned to the subscriber, which are made available to other subscribers, **characterised in that**, at the same time as a subscription payment for using the decentral radio network, a transmission of the position identifier of the subscriber is effected from the subscriber to a financial institution, acting as the data capture point, in order to create the address directory, the transmission being effected via an information carrier, which has a memory, during the arrangement of the information carrier in a transmission means and a corresponding debit being effected by the financial institution against an account belonging to the subscriber in the payment process.

2. Method according to claim 1, **characterised in that** the transmission of the position identifier is effected automatically.

3. Method according to claim 1 or claim 2, **characterised in that** the data capture point creates the address directory.

4. Method according to any one of claims 1 to 3, **characterised in that** the data capture point passes the address data on to a third party to create the address directory.

5. Method according to any one of claims 1 to 4, **characterised in that** the information carrier is in the form of a chip card, magnetic strip card or PIN card.

6. Method according to any one of claims 1 to 5, **characterised in that** the transmission means is an ATM machine.

7. Method according to any one of claims 1 to 6, **characterised in that** the transmission means has a writing/reading unit for the memory.

8. Method according to any one of claims 1 to 7, **characterised in that** the transmission of the position identifier is effected via a radio connection to the data capture point.

9. Method according to any one of claims 1 to 8, **characterised in that** the transmission of the position identifier is effected optically, preferably via an infrared connection, to the data capture point.

10. Method according to any one of claims 1 to 9, **characterised in that** the transmission of the position identifier is effected via an ultrasound connection to the data capture point.

11. Method according to any one of claims 1 to 10, **characterised in that** the position identifier transmitted by the paying subscriber comprises both the position identifier of the paying subscriber and the position identifier of one or more other subscribers.

## Revendications

1. Procédé de constitution d'un répertoire d'adresses d'abonnés dans un réseau hertzien décentralisé, les données d'adresses comprenant une caractéristique d'abonné et une caractéristique de position adjointe à l'abonné qui sont mises à la disposition d'autres abonnés,
**caractérisé en ce qu'**une transmission de la caractéristique de position de l'abonné se produit, simultanément à un paiement de taxes pour l'utilisation du réseau hertzien décentralisé, de l'abonné à un organisme financier pour la constitution du répertoire d'adresses servant de station de saisie de données, la transmission s'effectuant par l'intermédiaire d'un support d'informations présentant une mémoire, pendant la disposition du support d'informations dans un moyen de transmission et, dans le cadre de l'opération de paiement, un débit correspondant d'un compte de l'abonné étant effectué par l'organisme financier.

2. Procédé selon la revendication 1,
**caractérisé en ce que** la transmission de la caractéristique de position se produit automatiquement.

3. Procédé selon la revendication 1 ou 2,
**caractérisé en ce que** la station de saisie de données constitue le répertoire d'adresses.

4. Procédé selon l'une des revendications 1 à 3,
**caractérisé en ce que** la station de saisie de données transmet à un tiers les données d'adresses pour la constitution du répertoire d'adresses.

5. Procédé selon l'une des revendications 1 à 4,
**caractérisé en ce que** le support d'informations est constitué sous forme de carte à puces, de carte à bandes magnétiques ou de carte à code PIN.

6. Procédé selon l'une des revendications 1 à 5,
**caractérisé en ce que** le moyen de transmission est un distributeur automatique de billets de banque.

7. Procédé selon l'une des revendications 1 à 6,
**caractérisé en ce que** le moyen de transmission présente une unité d'écriture/lecture pour la mémoire.

8. Procédé selon l'une des revendications 1 à 7,
**caractérisé en ce que** la transmission de la caractéristique de position de produit par une liaison hertzienne avec la station de saisie de données.

9. Procédé selon l'une des revendications 1 à 8,
**caractérisé en ce que** la transmission de la caractéristique de position à la station de saisie de données se produit par voie optique, de préférence par une liaison infrarouge.

10. Procédé selon l'une des revendications 1 à 9,
**caractérisé en ce que** la transmission de la caractéristique de position se produit par une liaison ultrasonique avec la station de saisie de données.

11. Procédé selon l'une des revendications 1 à 10,
**caractérisé en ce que** la caractéristique de position transmise par l'abonné payant comprend aussi bien la caractéristique de position de l'abonné payant que la caractéristique de position d'un ou plusieurs autres abonnés.
